# EUROPEAN PATENT APPLICATION

(11) **EP 4 231 628 A1**
(43) Date of publication of application: **23.08.2023**
(21) Application number: 21893940.3
(22) Date of filing: 17.11.2021
(51) Int. Cl.: H04N 5/232

(54) **IMAGE PROCESSING METHOD AND DEVICE**

(30) Priority: 20.11.2020 CN 202011314604
(71) Applicant: Huawei Technologies Co., Ltd., Shenzhen, Guangdong 518129 (CN)
(72) Inventor: FENG, Kerong, Shenzhen, Guangdong 518129 (CN)
(74) Representative: Huawei European IPR
(86) International application number: PCT/CN2021/131204
(87) International publication number: WO 2022/105793

(57) **Abstract**

This application relates to an image processing method and a device therefor. The method is applied to an electronic terminal having a primary camera. The method includes: determining at least one secondary camera that performs a communication connection with the primary camera; obtaining at least one sub-image, where the at least one sub-image is obtained by performing image processing on at least one secondary image captured by the at least one secondary camera and a primary image captured by the primary camera; and generating a composite image by using the at least one sub-image. According to this application, a requirement of a user for multi-camera photographing can be met, and a composite image can be generated based on a requirement of the user.

## Description

This application claims priority to Chinese Patent Application No. 202011314604.5, filed with the China National Intellectual Property Administration on November 20, 2020 and entitled "IMAGE PROCESSING METHOD AND DEVICE THEREFOR", which is incorporated herein by reference in its entirety.

### TECHNICAL FIELD

This application relates to the field of image processing technologies, and in particular, to an image processing method and a device therefor.

### BACKGROUND

With the advancement of science and technology, people are used to recording moments in their lives by using cameras. Therefore, many electronic terminals have built-in cameras. In some scenarios, a single camera may not meet people's requirements. For example, in a live broadcast scenario, a live streamer and a product that is being described by the live streamer cannot be well presented only by using a single camera. Therefore, a plurality of cameras are simultaneously required in photographing.

In a related technology, in a technical solution in which a plurality of cameras are used to perform photographing together, images captured by the plurality of cameras are usually transmitted to a same device for splicing through communication connection. However, in this manner, only a simple effect can be presented, and a personalized requirement of a user cannot be met. Therefore, in the related technology, a technical solution in which different cameras can be controlled to simultaneously participate in photographing and generate images that meet a user's requirement is required.

### SUMMARY

In view of this, an image processing method and a device therefor are provided, to at least resolve the technical problem mentioned above.

According to a first aspect, an embodiment of this application provides an image processing method. The method is applied to an electronic terminal having a primary camera, and includes: determining at least one secondary camera that performs a communication connection with the primary camera; obtaining at least one sub-image, where the at least one sub-image is obtained by performing image processing on at least one secondary image captured by the at least one secondary camera and a primary image captured by the primary camera; and generating a composite image by using the at least one sub-image.

According to this method, image processing can be performed on different images obtained by different cameras, and a composite image can be generated by using an image obtained through image processing. In this way, a requirement of a user for multi-camera photographing can be met, and a composite image can be generated through customization based on a requirement of the user.

According to the first aspect, in a first possible implementation of the first aspect, the obtaining at least one sub-image includes: obtaining the at least one secondary image captured by the at least one secondary camera and the primary image captured by the primary camera; determining, in response to receiving an image processing request, a to-be-processed image on which the image processing is to be performed from the at least one secondary image and the primary image and the image processing for the to-be-processed image; and obtaining the at least one sub-image obtained by performing image processing on the to-be-processed image.

In other words, various customized image processing may be performed on an image captured by the secondary camera in the foregoing manner, to achieve an image effect required by the user, and better meet a personalized requirement of the user for an image.

According to the first aspect, in a second possible implementation of the first aspect, after the determining, in response to receiving an image processing request, a to-be-processed image on which the image processing is to be performed from the at least one secondary image and the primary image and the image processing for the to-be-processed image, the implementation includes: determining, from a candidate execution device, an execution device for performing the image processing on the to-be-processed image; and obtaining the at least one sub-image obtained by performing image processing on the to-be-processed image by the execution device.

During implementation, it may be determined that the execution device performs image processing on these images, so that a task executed by each execution device can be dynamically adjusted, and a more appropriate execution device can be selected for image processing, to improve image processing efficiency and reduce a delay.

According to the first aspect, in a third possible implementation of the first aspect, the execution device includes at least one of the electronic terminal and a secondary device on which the at least one secondary camera is located.

That is, in an implementation process, these images may be processed at a local end or at a remote end. In this manner, a long processing time caused by a large difference between devices is avoided, and personalized requirements of people are met.

According to the first aspect or any one of the foregoing implementations of the first aspect, in a fourth possible implementation of the first aspect, the determining at least one secondary camera that performs a communication connection with the primary camera includes: discovering, by using a discovery and connection service, the at least one secondary camera in an environment in which the electronic terminal is located; and establishing a communication connection with the secondary device on which the at least one secondary camera is located.

In the foregoing manner, the secondary camera around the primary camera may be properly used, and the secondary camera is controlled to perform photographing by establishing a communication connection with the secondary camera, to capture images in different scenarios.

According to the first aspect, in a fifth possible implementation of the first aspect, the determining, from a candidate execution device, an execution device for performing the image processing on the to-be-processed image includes: obtaining communication connection information of a communication connection established with each candidate execution device; and determining, based on the communication connection information and/or device capability information of each candidate execution device, the execution device for performing the image processing on the to-be-processed image.

In a process of determining the execution device, a more appropriate execution device may be selected by using the communication connection information and/or the device capability information, to improve image processing efficiency, and reduce a delay between devices.

According to the first aspect, in a sixth possible implementation of the first aspect, the determining, based on the communication connection information and/or device capability information of each candidate execution device, the execution device for performing the image processing on the to-be-processed image includes: determining, by using the communication connection information of each candidate execution device, a candidate execution device that can perform communication transmission; and determining, based on device capability information, the execution device from the candidate execution device that can perform communication transmission.

In other words, in the method, after a candidate secondary device that can perform image processing is determined based on a real-time network status, a device for performing image processing may be determined by using device capability information of the secondary device, so that an appropriate processing device can be selected when normal communication is ensured, to resolve low image processing performance of some devices and reduce a delay caused by cross-device processing.

According to the first aspect, in a seventh possible implementation of the first aspect, the device capability information includes data processing information and image processing information, the data processing information includes data processing capability information of each secondary device, and the image processing information includes information about an image effect that each secondary device can generate on an image.

That is, in a process of determining the execution device, both a data processing capability of each device and an image processing capability of each device are considered, to more properly determine the execution device.

According to the first aspect, in an eighth possible implementation of the first aspect, the determining the execution device from the candidate secondary device based on the device capability information includes: sorting the candidate execution device by using the data processing information and/or the image processing information of the candidate execution device, and determining a priority of performing image processing by the candidate execution device; and determining the execution device based on the priority.

It may be learned that, in a process of determining the execution device, when it is determined that the communication connection is normal, sorting may be performed by using the foregoing data processing information and image processing information, and a device having a better data processing capability and a better image processing capability is preferably selected, to improve an image processing speed and effectively reduce a data processing burden of some secondary devices.

According to the first aspect, or in the eighth or a ninth possible implementation of the first aspect, the image processing information further includes an image processing algorithm for implementing the image effect.

In other words, in a process of processing an image by each secondary device, a same image effect may be implemented by using different image processing algorithms. Therefore, the image processing information further includes a specific image processing algorithm for implementing the image effect.

According to the first aspect, or in a tenth possible implementation of the first aspect, the image processing algorithm is received from the at least one secondary device through the communication connection.

An electronic terminal having a primary camera usually has better performance than each secondary device. However, each device may have different image processing algorithms and different image effects. To ensure that the electronic terminal can perform image processing expected by a user for all images, an image processing algorithm of the secondary device may be synchronized to the electronic terminal, to ensure that these images can be executed on the electronic terminal.

According to the first aspect or any one of the foregoing implementations of the first aspect, in an eleventh possible implementation of the first aspect, the generating a composite image by using the at least one sub-image includes: performing compositing processing on the at least one sub-image based on a preset image composite mode to generate the composite image.

For a secondary image and a primary image on which image processing has been performed, the composite image may be generated based on the preset image composite mode, to meet a personalized requirement of a user for the composite image.

According to a second aspect, an embodiment of this application provides an image processing method. The method includes: determining a plurality of cameras that perform communication connection with each other; obtaining a plurality of sub-images obtained by performing image processing on a plurality of raw images captured by the plurality of cameras; and generating a composite image by using the plurality of sub-images.

In other words, images may be captured by using a plurality of cameras that perform communication connection with each other, sub-images obtained by performing image processing on these images are obtained, and a composite image is finally generated by using these sub-images, to meet a requirement of people for each image during capturing a plurality of images.

According to the second aspect, in a first possible implementation of the second aspect, the obtaining a plurality of sub-images obtained by performing image processing on a plurality of raw images captured by the plurality of cameras includes: determining an execution device for performing corresponding image processing on each raw image; and obtaining the plurality of sub-images obtained by performing corresponding image processing on each raw image by the execution device.

During implementation, after it is determined that image processing is performed on these raw images, an execution device for performing the image processing may be determined, so that a requirement of a user for each raw image is met, and an image processing time is reduced.

According to the second aspect, in a first possible implementation of the second aspect, the determining an execution device for performing corresponding image processing on each raw image includes: determining, based on device capability information and communication connection information of each execution device, the execution device for performing corresponding image processing.

During implementation, the execution device may be determined through the device capability information and the communication connection information, to determine the execution device in a quantized manner, and enable the determined execution device to be more suitable for performing image processing.

According to a third aspect, an embodiment of this application provides an image processing device. The image processing device may perform the image processing method in the first aspect or one or more of the possible implementations of the first aspect, and the image processing method in the second aspect or one or more of the possible implementations of the second aspect.

According to a fourth aspect, an embodiment of this application provides a non-volatile computer-readable storage medium. The non-volatile computer-readable storage medium stores computer program instructions. When the computer program instructions are executed by a processor, the image processing method according to the first aspect or one or more of the possible implementations of the first aspect, and the image processing method according to the second aspect or one or more of the possible implementations of the second aspect are implemented.

According to a fifth aspect, an embodiment of this application provides a computer program product. The computer program product includes computer-readable code or a non-volatile computer-readable storage medium including computer-readable code. When the computer-readable code is run in an electronic device, a processor in the electronic device performs the image processing method according to the first aspect or one or more of the possible implementations of the first aspect, and the image processing method according to the second aspect or one or more of the possible implementations of the second aspect.

These aspects and other aspects of this application are more concise and more comprehensive in descriptions of the following (a plurality of) embodiments.

### BRIEF DESCRIPTION OF DRAWINGS

The accompanying drawings included in this specification and constituting a part of this specification and this specification jointly show example embodiments, features, and aspects of this application, and are intended to explain principles of this application.
FIG. 1 is a diagram of an application scenario of performing image processing according to an embodiment of this application;
FIG. 2 is a flowchart of interaction between devices according to an embodiment of this application;
FIG. 3 is a schematic diagram of a software structure of an electronic device according to an embodiment of this application;
FIG. 4 is a flowchart of steps of an image processing method according to an embodiment of this application;
FIG. 5 is a block diagram of a structure of an electronic device according to an embodiment of this application; and
FIG. 6 is a schematic diagram of a structure of an electronic device according to an embodiment of this application.

### DESCRIPTION OF EMBODIMENTS

The following describes various example embodiments, features, and aspects of this application in detail with reference to the accompanying drawings. Identical reference numerals in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "used as an example, an embodiment, or an illustration". Any embodiment described as "exemplary" is not necessarily explained as being superior or better than other embodiments.

In addition, to better describe this application, numerous specific details are provided in the following specific implementations. A person skilled in the art should understand that this application can also be implemented without some specific details. In some embodiments, methods, means, elements, and circuits that are well-known to a person skilled in the art are not described in detail, so that the subject matter of this application is highlighted.

A camera mentioned in this application is an apparatus that can capture an image through an image sensor of the camera. An electronic terminal described in this application is various devices having a camera, including a mobile phone, a tablet computer, a wearable device (for example, a watch, a band, or a smart helmet), an in-vehicle device, a smart home device, an augmented reality (augmented reality, AR)/a virtual reality (virtual reality, VR) device, a notebook computer, an ultra-mobile personal computer (ultra-mobile personal computer, UMPC), a netbook, a personal digital assistant (personal digital assistant, PDA), and the like. A mobile phone is used as an example in some embodiments of this application. It may be understood that these embodiments may also be applied to another type of mobile terminal.

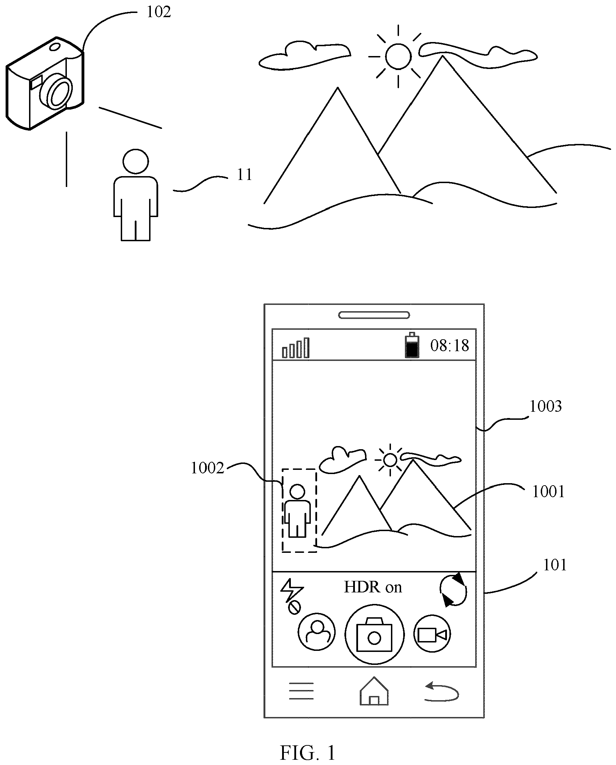

To better describe this application, the following specifically describes an application scenario according to an example embodiment of this application with reference to FIG. 1.

In a scenario shown in FIG. 1, a user performs photographing by using a plurality of mobile phones. During photographing, a mobile phone 101 may photograph a natural scene 10, and a camera 102 may be responsible for photographing a user 11. Then, an image 1001 captured by the mobile phone 101 is used as a background image, and an image 1002 captured by the camera is used as a foreground image, to finally generate a composite image 1003. In this scenario, the user expects to perform beautification, for example, whitening processing and slimming processing, on the user 11 photographed by the camera 102. However, the camera 102 does not have these capabilities. In this case, the image processing method in the example embodiment of this application may be used.

Although only two cameras and/or devices including cameras are shown in FIG. 1, a quantity of cameras is not limited in this application. The cameras mentioned in this application may include a plurality of cameras (for example, a plurality of built-in primary/secondary cameras) in a single electronic terminal and a remote device including a camera.

Performance of the cameras and the electronic terminals having the cameras mentioned in this application is not limited. In other words, effects of photographing by the cameras and effects of processing an image by the electronic terminals may be the same or may be different.

In addition to the scenario shown in FIG. 1, the image processing method in the example embodiment of this application may be further applied to a plurality of application scenarios. For example, a user A may use a mobile phone A, and a user B may use a mobile phone B to perform a video call. Then, for an image A captured by the mobile phone A and an image B captured by the mobile phone B, the mobile phone A may generate, by using the image processing method in the example embodiment of this application, a composite image that is composited by the image A and the image B and that has a specific image processing effect. For example, in the composite image, a profile picture of the user A captured by the image A becomes a specific animal image, and a profile picture of the user B captured by the image B remains unchanged.

In addition, the image processing method in the example embodiment of this application may also be used in a video live broadcast scenario. In a live broadcast scenario, a live streamer may use a mobile phone with good performance as a primary device to capture a picture related to the live streamer, and may use a plurality of secondary devices to capture a picture related to a commodity. Then, a composite image may be generated by using each image captured by the primary device and the plurality of secondary devices. In the composite image, the picture related to the live streamer is used as a main image, and the image captured by the secondary device is arranged on one side of the main image as a sub-image.

The foregoing provides only an example of an application scenario of the image processing method that is applicable to the example embodiment of this application, and is not limited thereto. In an implementation process, provided that a generated final image is an image generated by using an image captured by a local device and an image captured by a remote device, the image processing method in the example embodiment of this application may be used.

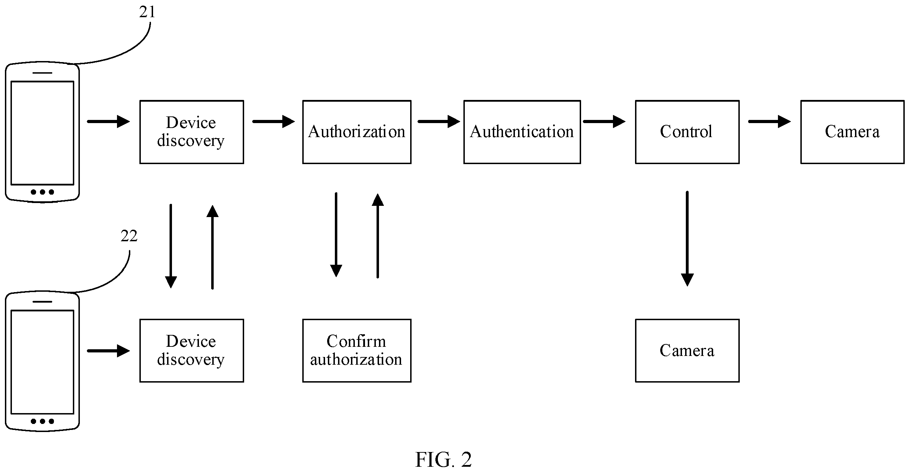

FIG. 2 is a flowchart of interaction between devices according to an embodiment of this application. For ease of description, FIG. 2 includes only a mobile phone 21 and a mobile phone 22, and each mobile phone has a built-in camera. A camera application is used to implement control between a plurality of electronic devices.

In general, a device near a mobile phone may be converted to a virtual component in the mobile phone, so that a capability of the device may be used as an extending capability of the mobile phone. In this application, a camera near a mobile phone or a device having a camera may be converted to a virtual camera in the mobile phone for use.

Therefore, as shown in FIG. 2, the mobile phone 21 may enable a device discovery service, and the mobile phone 21 may learn which devices exist in a specific range near the mobile phone 21. This technology for discovering a nearby device is referred to as a proximity discovery technology. Further, device-to-device (DeviceToDevice, D2D) communication within a distance may be further implemented by using the proximity discovery technology. Therefore, these devices having a D2D communication capability are referred to as proximity devices. In a related technology, a method for implementing proximity discovery is to set a proximity service server in a network, and the mobile phone 21 registers with the proximity service server to obtain a proximity service. When the mobile phone 21 needs to discover another nearby mobile phone 21, the mobile phone 21 sends a discovery request to the proximity service server. The sending request may include an indication of a specific type, for example, discovering camera-type hardware. The proximity service server controls measurement and discovery between the mobile phones 21, or the proximity service server indicates a base station to control measurement and discovery between the mobile phones 21. Therefore, the mobile phone 21 may discover a device within a distance around through network control.

Then, the mobile phone 21 may establish a communication connection with the mobile phone 22 discovered in the device discovery service, and send an authorization request to the mobile phone 22. During implementation, a dialog box prompting a user to perform authorization may be displayed on an interface of the mobile phone 22. In the dialog box, the user may choose whether to authorize the mobile phone 21 to use a camera inside the mobile phone 22. Preferably, the user may be prompted to select an authorization type that is not to be used through the dialog box.

After authorization of the mobile phone 22 is obtained, the mobile phone 22 may be authenticated. In other words, it is determined whether accounts used by the mobile phone 21 and the mobile phone 22 are the same. If the accounts are the same, it is authenticated that the authentication is performed on the same account. If the accounts are different, it is determined that the mobile phone 21 and the mobile phone 22 are cross-account devices, and a prompt is displayed on the interface of the mobile phone 22 to output verification information, to ensure that account authentication is completed.

Then, the mobile phone 21 may map the camera in the mobile phone 22 to the mobile phone 21 as a virtual camera in the mobile phone 21. In this process, the mobile phone 21 may register the virtual camera. The registration process includes allocating identification information to the mobile phone 22 and the virtual camera. In addition, the mobile phone 21 may further obtain device capability information from the mobile phone 22. The device capability information may include attribute information of a camera, for example, a light angle and an optical zoom multiple of the camera, and further include data processing information, that is, a data processing capability of the mobile phone 22. In addition, the device capability information further includes image processing information, for example, image algorithm information that can implement a specific image effect. Finally, the mobile phone 21 may control to open a camera of the mobile phone 21 and a camera in the mobile phone 22.

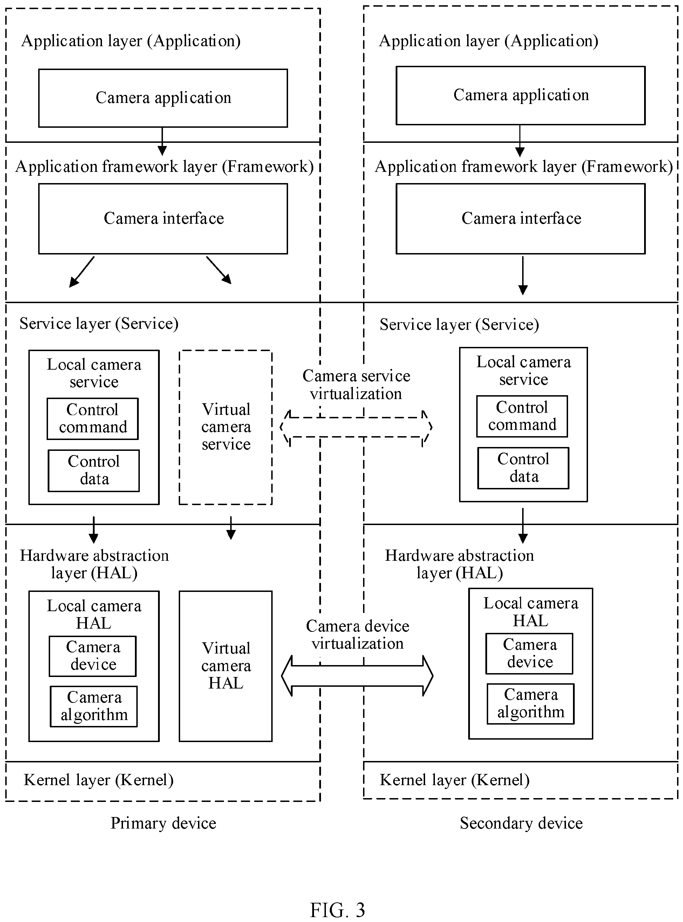

To better describe this application, the following describes an internal architecture of an electronic terminal with reference to FIG. 3. In this embodiment of this application, a primary device/a secondary device uses a hierarchical architecture, an event-driven architecture, a microkernel architecture, a microservice architecture, or a cloud architecture. In this embodiment of this application, a software structure of an electronic device is described by using an Android system with a layered architecture as an example.

To better describe this application, the software structure of the electronic device is only described in the following by using a camera application as an example. However, in implementation, the electronic device may further include various applications. In addition, for ease of describing the electronic device, an electronic device that is used by a user to generate a composite image is used as a primary device, and an electronic device that assists the primary device in generating the composite image is used as a secondary device.

As shown in FIG. 3, the primary device includes an application (Application) layer, an application framework (Framework) layer, a hardware abstraction (hard abstraction layer, HAL) layer, and a kernel (Kernel) layer.

The application layer may include a series of application packages. For example, the application packages may include applications such as Telephone, Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions. The framework layer provides developers with an API framework that can be used for fully accessing an application. Specifically, the framework layer provides a large quantity of APIs for developing an application, and an APP that meets a related service requirement may be constructed by invoking a corresponding API. When an application is a camera, the application framework layer may provide many camera-related APIs.

In FIG. 3, a service layer indicates various services that can be provided by a camera. During implementation, the service layer may include a service related to a local camera, including a device control command and device control data. In this application, the service layer may further include a virtual camera service of a virtual camera corresponding to the secondary device. In other words, in implementation, a virtual camera service that can be invoked may be provided for the primary device by adding a virtual camera service corresponding to the virtual camera to the service layer.

The HAL layer is an interface layer between an operating system kernel and a hardware circuit, and is used for abstracting hardware. The hardware abstraction layer hides a hardware interface detail of a particular platform, and provides the operating system with a virtual hardware platform, so that the operating system has hardware independence and may perform migrations on multiple platforms. From the perspective of the software and hardware test, the software and hardware test work may be respectively completed based on the hardware abstraction layer, so that the software and hardware test work may be probably performed in parallel.

The HAL layer may include camera device information and camera algorithm information. The camera device information is information about a parameter related to performance of a camera, and the camera algorithm information is an image processing algorithm that can be used by the camera to process an image. For example, the user may invoke a camera algorithm through the HAL layer to perform blurring processing on a captured image. As shown in FIG. 3, the HAL layer may include a local camera HAL related to the local camera and a virtual camera HAL layer having a same structure as the local camera HAL, that is, the virtual camera HAL also includes camera device information and camera algorithm information. During implementation, the virtual camera may be added by adding a virtual camera HAL corresponding to the secondary camera to the HAL layer. In this way, a local camera service at the service layer may invoke the local camera HAL or the virtual camera HAL according to a requirement.

Finally, the kernel layer is a layer between hardware and software. The kernel layer includes at least drives such as a display drive, a camera drive, an audio drive, and a sensor drive.

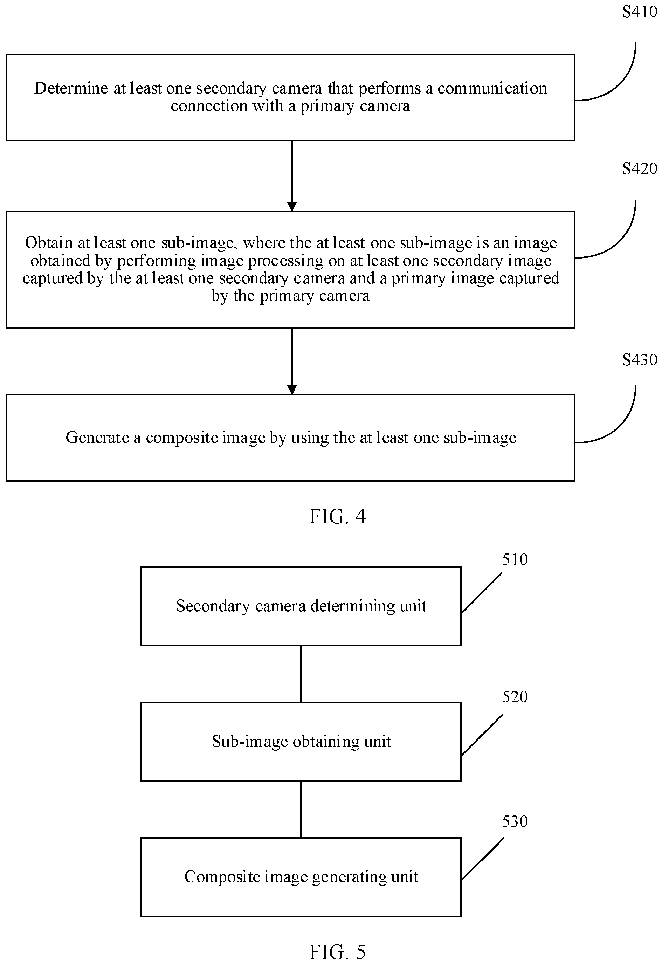

During implementation, a remote camera may be converted to a virtual camera in an electronic device (for example, a mobile phone) in which a local camera is located in the foregoing described manner. Based on this, this application focuses on how to properly allocate the local camera (a primary camera mentioned below) and the remote camera (a secondary camera mentioned below), to improve image processing efficiency and meet a user requirement. The following describes an image processing method in an example embodiment of this application in detail with reference to FIG. 4. FIG. 4 is a flowchart of steps of an image processing method according to an embodiment of this application.

The method shown in FIG. 4 may be applied to a primary device having a built-in primary camera. That is, when a user performs photographing by using a plurality of cameras, an electronic terminal in which a camera is located is usually used as a primary operation terminal. Based on this, a primary operation terminal of a user may be referred to as a primary device, and a camera in the primary device is referred to as a primary camera. It should be noted that a quantity of the primary cameras is not limited, and depends on a quantity of built-in cameras in the electronic terminal.

S410: Determine at least one secondary camera that performs a communication connection with the primary camera. As described above, the at least one secondary camera in an environment in which the electronic terminal is located may be discovered by enabling a discovery and connection service in the electronic terminal. Preferably, a secondary camera in a short distance of the electronic terminal may be discovered by using different near field communication technologies. However, in implementation, a secondary camera that is located in a different space from the electronic terminal may also be discovered through a wireless transmission network. For example, when using the primary camera, the user may discover, through Bluetooth, a secondary camera that is located in a same room as the user. In addition, when using the primary camera, the user may further use a camera of a friend of the user that is located in a different city from the user as the secondary camera.

Then, a communication connection is established with the secondary device on which the at least one secondary camera is located. During the communication connection, as shown in FIG. 2, the primary device may obtain authentication and authorization of each secondary device, and establish a secondary camera corresponding to the secondary camera in the primary device. It should be noted that, after the communication connection with the secondary device is established, image processing information in each secondary device may be sent to the primary device, that is, the primary device is converted to a device including more image processing information, and the image processing information includes an image processing algorithm.

During implementation, a device with good performance is usually selected as the primary device. In this case, various image processing algorithms in the secondary device may be synchronized to the primary device. In this way, it can be ensured that the primary device meets a requirement of a user for each sub-image included in a composite image as much as possible.

S420: Obtain at least one sub-image, where the at least one sub-image is obtained by performing image processing on at least one secondary image captured by the at least one secondary camera and a primary image captured by the primary camera.

During implementation, the primary device may control the primary camera to obtain the primary image, and may control at least one secondary camera to obtain the at least one secondary image captured by the at least one secondary camera. Then, in response to an image processing request input by a user, a to-be-processed image on which the image processing is to be performed from the at least one secondary image and the primary image and the image processing for the to-be-processed image are determined.

Specifically, for a plurality of secondary images captured by at least one secondary camera, the user may select some images or all images from these secondary images. For example, when a mobile phone A is in communication connection with both a camera B and a notebook computer C, the mobile phone A may control the camera B and the notebook computer C to capture a secondary image. When a secondary image B and a secondary image C are obtained, the user may select only the secondary image B from these secondary images.

Then, the user may choose to perform corresponding image processing on these images. For example, after selecting an image B, the user selects whitening processing for the image B, and after selecting an image C, selects blurring processing for the image C and selects slimming processing for an image A. In a specific implementation, secondary images captured by these secondary devices and image processing that can be provided may be displayed on a display page of the primary device, and the user may select a sub-image needed by the user and image processing for the secondary image through touching, where the sub-image includes a secondary image and a primary image.

Finally, the at least one sub-image obtained by performing image processing on the to-be-processed image is obtained. Specifically, an execution device for performing the image processing on the to-be-processed image may be first determined. The execution device may include a primary device and/or a secondary device. That is, there may be a plurality of possibilities for the execution device for performing the image processing on the to-be-processed image, including that image processing is performed by the primary device on each to-be-processed image. In another example, image processing is performed on some to-be-processed images by the primary device, but image processing is performed on some to-be-processed images by a corresponding secondary device. The corresponding secondary device may be a secondary device that captures the to-be-processed image, or may not be a device that captures the to-be-processed image. In another example, image processing is performed on all to-be-processed images by a single secondary device.

Based on the foregoing possibilities, a preferred embodiment of this application provides a manner for determining an execution device. Specifically, communication connection information of a communication connection established with each candidate execution device is obtained. During implementation, to ensure communication effectiveness, the communication connection information of each candidate execution device may be obtained in real time or at an equal time interval (the time interval is very short), and a communication status between the primary device and the secondary device may be determined through the communication connection information.

Then, the execution device for performing the image processing on the to-be-processed image is determined based on the communication connection information and/or device capability information of each candidate execution device. The device capability information includes data processing information and image processing information, the data processing information includes data processing capability information of each secondary device, and the image processing information includes information about an image effect that each secondary device can generate on an image. In other words, when the execution device is considered, in a preferred embodiment, both data processing capability and image processing capability of each secondary device are considered.

Specifically, a candidate secondary device that can perform communication transmission is determined by using the communication connection information of each candidate execution device. In an implementation process, a threshold may be set for a communication transmission rate. When the communication transmission rate is higher than the threshold, another execution device other than a local device may be selected. When the communication transmission rate is lower than the threshold, the local device is selected as an execution entity.

Then, the execution device may be determined based on device capability information from the candidate execution device. In other words, the candidate execution device is sorted by using the data processing information and/or the image processing information of the candidate execution device, a priority of performing image processing by the candidate execution device is determined, and then the execution device is determined based on the priority.

For example, these candidate execution devices may be sorted by using data processing information of the candidate execution devices. For example, these candidate execution devices may be sorted based on CPU performance of the candidate execution devices, to determine a priority for performing image processing.

For example, these candidate execution devices may be further sorted by using image processing information of the candidate execution devices. For example, these candidate execution devices may be sorted based on GPU performance of the candidate execution devices, to determine the priority for performing image processing.

In addition, in the method, image processing selected by the user for each to-be-processed image may be first determined, then devices that can perform these image processing are determined from these candidate execution devices, and then these devices are sorted based on an image processing effect, to determine the priority for performing image processing. During implementation, in the method, the data processing information and the image processing information may be further comprehensively considered, and these candidate execution devices are sorted, to determine the priority for performing image processing.

After the execution device is determined, the primary device may send the to-be-processed image to the execution device for processing. After performing image processing on the to-be-processed image, the execution device sends an image obtained by performing image processing to the primary device.

During implementation, to improve security between devices, for a captured image (including a primary image captured by the primary camera and a secondary image captured by each secondary camera), whether a photographing subject performs image processing or the primary device performs image processing on the image may be determined based on only the device capability information. For example, for a secondary image A captured by a secondary device A, when a network connection is normal, whether the secondary device A or the primary device performs corresponding image processing on the secondary image A may be determined based on the device capability information.

S430: Generate a composite image by using the at least one sub-image.

During implementation, these sub-images are composited based on a preset image composite mode to generate the composite image. The preset image composite mode may be a mode specified by a user. For example, an image may be selected as a background image, and another image may be selected as a foreground image. In another example, all these images may be spliced.

The foregoing description is made by using a user terminal operated by a user as a primary view angle. During implementation, there may be a scenario in which there are a plurality of cameras, and each camera has an image capture capability and an image processing capability, and may communicate with each other in the foregoing described manner. In this case, each camera may be used as a control terminal to determine an execution device of each captured image. In addition, an independent server that is in communication connection with these cameras may be used to determine an execution device of each image.

In this scenario, first, a plurality of cameras that perform communication connection with each other may be determined, and then a plurality of sub-images obtained by performing image processing on a plurality of raw images captured by the plurality of cameras may be obtained. Specifically, an execution device for performing corresponding image processing on each raw image may be determined. Specifically, the execution device for performing corresponding image processing is determined based on device capability information and communication connection information of each execution device. The plurality of sub-images obtained by performing corresponding image processing on each raw image by the execution device is obtained. Finally, the composite image is generated by using the plurality of sub-images.

It may be understood that to implement the foregoing functions, the terminal or the like includes corresponding hardware structures and/or software modules for performing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the terminal or the like may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

When each functional module is obtained through division based on each corresponding function, FIG. 5 is a block diagram of a structure of an electronic terminal in the foregoing embodiment. The electronic apparatus includes: a secondary camera determining unit 510, a sub-image obtaining unit 520, and a composite image generating unit 530. The secondary camera determining unit 510 is configured to determine at least one secondary camera that performs a communication connection with the primary camera. The sub-image obtaining unit 520 is configured to obtain at least one sub-image. The at least one sub-image is obtained by performing image processing on at least one secondary image captured by the at least one secondary camera and a primary image captured by the primary camera. The composite image generating unit 530 is configured to generate a composite image by using the at least one sub-image.

Optionally, the sub-image obtaining unit 520 includes an image obtaining module, an image processing determining module, and a sub-image obtaining module. The image obtaining module is configured to obtain the at least one secondary image captured by the at least one secondary camera and the primary image captured by the primary camera. The image processing determining module is configured to determine, in response to receiving an image processing request, a to-be-processed image on which the image processing is to be performed from the at least one secondary image and the primary image and the image processing for the to-be-processed image. The sub-image obtaining module is configured to obtain the at least one sub-image obtained by performing image processing on the to-be-processed image.

The electronic device further includes an execution device determining module, and the execution device determining module is configured to determine an execution device for performing the image processing on the to-be-processed image. Based on this, the sub-image obtaining module is specifically configured to obtain the at least one sub-image obtained by performing image processing on the to-be-processed image by the execution device.

Optionally, the execution device includes at least one of the electronic terminal and a secondary device on which the at least one secondary camera is located.

The secondary camera determining unit 510 includes a discovery module and a communication connection module. The discovery module is configured to discover, by using a discovery and connection service, the at least one secondary camera in an environment in which the electronic terminal is located. The communication connection module is configured to establish a communication connection with the secondary device on which the at least one secondary camera is located.

The execution device determining module includes a communication connection information determining submodule and an execution device submodule. The communication connection information determining submodule is configured to obtain communication connection information of a communication connection established with each candidate execution device. The execution device submodule is configured to determine, based on the communication connection information and/or device capability information of each candidate execution device, the execution device for performing the image processing on the to-be-processed image.

Optionally, the execution device submodule is specifically configured to determine, by using the communication connection information of each candidate execution device, a candidate secondary device that can perform communication transmission; and determine the execution device from the candidate secondary device based on device capability information.

Optionally, the device capability information includes data processing information and image processing information, the data processing information includes data processing capability information of each secondary device, and the image processing information includes information about an image effect that each secondary device can generate on an image.

The execution device submodule is specifically configured to sort the candidate execution device by using the data processing information and/or the image processing information of the candidate execution device, and determine a priority of performing image processing by the candidate execution device; and determine the execution device based on the priority.

Optionally, the image processing information further includes an image processing algorithm for implementing the image effect.

The electronic device further includes an image processing algorithm receiving unit. The image processing algorithm receiving unit is configured to receive the image processing algorithm from the at least one secondary device through the communication connection.

Optionally, the composite image generating unit 530 is configured to composite the primary image and the at least one secondary image based on a preset image composite mode to generate the composite image.

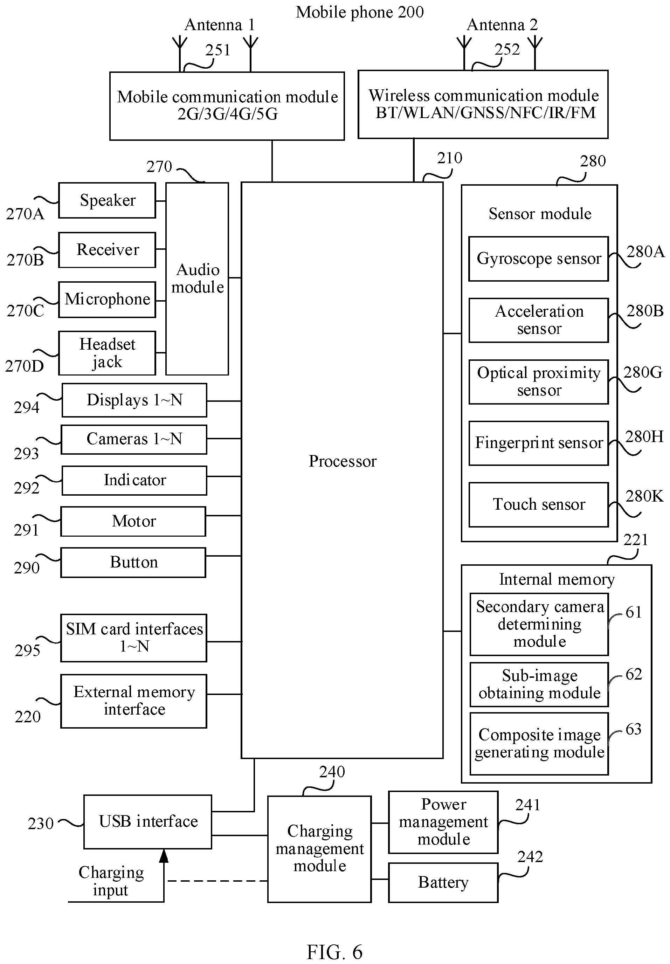

FIG. 6 is a schematic diagram of a structure of a terminal device according to an embodiment of this application. For example, the terminal device is a mobile phone. FIG. 6 is a schematic diagram of a structure of a mobile phone 200.

The mobile phone 200 may include a processor 210, an external memory interface 220, an internal memory 221, a USB interface 230, a charging management module 240, a power management module 241, a battery 242, an antenna 1, an antenna 2, a mobile communication module 251, a wireless communication module 252, an audio module 270, a speaker 270A, a receiver 270B, a microphone 270C, a headset jack 270D, a sensor module 280, a button 290, a motor 291, an indicator 292, a camera 293, a display 294, a SIM card interface 295, and the like. The sensor module 280 may include a gyroscope sensor 280A, an acceleration sensor 280B, an optical proximity sensor 280G, a fingerprint sensor 280H, and a touch sensor 280K (certainly, the mobile phone 200 may further include other sensors such as a temperature sensor, a pressure sensor, a distance sensor, a magnetic sensor, an ambient light sensor, a barometric pressure sensor, and a bone conduction sensor, which are not shown in the figure).

It may be understood that an illustrated structure in this embodiment of this application does not constitute a specific limitation on the mobile phone 200. In some other embodiments of this application, the mobile phone 200 may include more or fewer components than those shown in the figure, combine some components, divide some components, or have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (Neural-network Processing Unit, NPU). Different processing units may be independent components, or may be integrated into one or more processors. The controller may be a nerve center and a command center of the mobile phone 200. The controller may generate an operation control signal based on an instruction operation code and a time sequence signal, to complete control of instruction reading and instruction execution.

A memory may be further disposed in the processor 210, and is configured to store instructions and data. In some embodiments, the memory in the processor 210 is a cache. The memory may store instructions or data that has been used or cyclically used by the processor 210. If the processor 210 needs to use the instructions or the data again, the processor 210 may directly invoke the instructions or the data from the memory. This avoids repeated access and reduces waiting time of the processor 210, thereby improving system efficiency.

The processor 210 may run the image processing method provided in embodiments of this application, so that a requirement of a user for multi-camera photographing can be met, and a composite image can be generated based on a requirement of the user. The processor 210 may include different components. For example, when a CPU and a GPU are integrated, the CPU and the GPU may cooperate to perform the image processing method provided in embodiments of this application. For example, in the image processing method, some algorithms are executed by the CPU, and other algorithms are executed by the GPU, to obtain high processing efficiency.

The display 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, OLED), or the like. In some embodiments, the mobile phone 200 may include one or N displays 294, where N is a positive integer greater than 1. The display 294 may be configured to display information input by a user or information provided to a user, and various graphical user interfaces (graphical user interface, GUI). For example, the display 294 may display a photo, a video, a web page, a file, or the like. For another example, the display 294 may display a graphical user interface. The graphical user interface includes a status bar, a navigation bar that can be hidden, a time and weather widget (widget), and an application icon, for example, a browser icon. The status bar includes an operator name (for example, China Mobile), a mobile network (for example, 4G), time, and a battery level. The navigation bar includes an icon of a back (back) button, an icon of a home (home) button, and an icon of a forward button. In addition, it may be understood that, in some embodiments, the status bar may further include a Bluetooth icon, a Wi-Fi icon, an icon of an externally-connected device, and the like. It may be further understood that, in some other embodiments, the graphical user interface may further include a dock bar, and the dock bar may include an icon of a frequently-used application and the like. After the processor 210 detects a touch event of a user on an application icon by using a finger (a stylus or the like), in response to the touch event, the processor 210 starts a user interface of an application corresponding to the application icon, and displays the user interface of the application on the display 294.

In this embodiment of this application, the display 294 may be one integrated flexible display, or may be a spliced display including two rigid screens and one flexible screen located between the two rigid screens.

After the processor 210 performs the image processing method provided in this embodiment of this application, the terminal device may establish a connection with another terminal device through an antenna 1, an antenna 2, or a USB interface, and transmit data and control the display 294 to display a corresponding graphical user interface according to the image processing method provided in this embodiment of this application.

The camera 293 (which may be a front-facing camera, a rear-facing camera, or a camera that may serve as both a front-facing camera and a rear-facing camera) is configured to capture a static image or a video. Usually, the camera 293 may include a photosensitive element such as a lens group and an image sensor. The lens group includes a plurality of lenses (convex lenses or concave lenses), and is configured to: collect an optical signal reflected by a to-be-photographed object, and transfer the collected optical signal to the image sensor. The image sensor generates a raw image of the to-be-photographed object based on the optical signal.

The internal memory 221 may be configured to store computer-executable program code, and the executable program code includes instructions. The processor 210 runs the instructions stored in the internal memory 221, to implement various function applications and data processing of the mobile phone 200. The internal memory 221 may include a program storage area and a data storage area. The program storage area may store code of an operating system, an application (for example, a camera application or a WeChat application), and the like. The data storage area may store data (for example, an image or a video collected by the camera application) and the like that are created during use of the mobile phone 200.

The internal memory 221 may further store one or more computer programs 1310 corresponding to the image execution processing method provided in this embodiment of this application. The one or more computer programs 1304 are stored in the memory 221 and are configured to be executed by the one or more processors 210. The one or more computer programs 1310 include instructions. The instructions may be used to perform steps in the embodiment corresponding to FIG. 4. The computer program 1310 may include a secondary camera determining module 61, a sub-image obtaining module 62, and a composite image generating module 63. The camera determining module 61 is configured to determine at least one secondary camera that performs a communication connection with the primary camera. The sub-image obtaining module 62 is configured to obtain at least one sub-image. The at least one sub-image is obtained by performing image processing on at least one secondary image captured by the at least one secondary camera and a primary image captured by the primary camera. The composite image generating module 63 is configured to generate a composite image by using the at least one sub-image. When code of a data transmission method stored in the internal memory 221 is run by the processor 210, the processor 210 may control the display to display the composite image.

In addition, the internal memory 221 may include a high-speed random access memory, and may further include a non-volatile memory, for example, at least one magnetic disk storage device, a flash memory device, or a universal flash memory (universal flash storage, UFS).

Certainly, code of the image processing method provided in this embodiment of this application may alternatively be stored in an external memory. In this case, the processor 210 may run the code of the image processing method stored in the external memory through the external memory interface 220.

The following describes functions of the sensor module 280.

The gyroscope sensor 280A may be configured to determine a motion posture of the mobile phone 200. In some embodiments, angular velocities of the mobile phone 200 around three axes (namely, axes x, y, and z) may be determined by using the gyroscope sensor 280A. In other words, the gyroscope sensor 280A may be configured to detect a current motion status of the mobile phone 200, for example, a shaking state or a static state.

When the display in this embodiment of this application is a foldable screen, the gyroscope sensor 280A may be configured to detect a folding or unfolding operation performed on the display 294. The gyroscope sensor 280A may report the detected folding or unfolding operation as an event to the processor 210, to determine whether the display 294 is in a folded state or an unfolded state.

The acceleration sensor 280B may detect magnitudes of accelerations in various directions (usually on three axes) of the mobile phone 200. In other words, the gyroscope sensor 280A may be configured to detect a current motion status of the mobile phone 200, for example, a shaking state or a static state. When the display in this embodiment of this application is a foldable screen, the acceleration sensor 280B may be configured to detect a folding or unfolding operation performed on the display 294. The acceleration sensor 280B may report the detected folding or unfolding operation as an event to the processor 210, to determine whether the display 294 is in a folded state or an unfolded state.

The optical proximity sensor 280G may include a light emitting diode (LED) and an optical detector, for example, a photodiode. The light emitting diode may be an infrared light emitting diode. The mobile phone emits infrared light by using the light emitting diode. The mobile phone detects infrared reflected light from a nearby object by using the photodiode. When sufficient reflected light is detected, the mobile phone may determine that there is an object near the mobile phone. When insufficient reflected light is detected, the mobile phone may determine that there is no object near the mobile phone. When the display in this embodiment of this application is a foldable screen, the optical proximity sensor 280G may be disposed on a first screen of the foldable display 294, and the optical proximity sensor 280G may detect a magnitude of an angle between the first screen and a second screen in a folded or unfolded state based on an optical path difference between infrared signals.

The gyroscope sensor 280A (or the acceleration sensor 280B) may send detected motion status information (for example, the angular velocity) to the processor 210. The processor 210 determines, based on the motion status information, whether the mobile phone is currently in a handheld state or a tripod state (for example, when the angular velocity is not 0, it indicates that the mobile phone 200 is in the handheld state).

The fingerprint sensor 280H is configured to collect a fingerprint. The mobile phone 200 may use a feature of the collected fingerprint to implement fingerprint-based unlocking, application lock access, fingerprint-based photographing, fingerprint-based call answering, and the like.

The touch sensor 280K is also referred to as a "touch panel". The touch sensor 280K may be disposed in the display 294, and the touch sensor 280K and the display 294 form a touchscreen, which is also referred to as a "touch screen". The touch sensor 280K is configured to detect a touch operation performed on or near the touch sensor 280K. The touch sensor may transfer the detected touch operation to the application processor to determine a type of the touch event. Visual output related to the touch operation may be provided by using the display 294. In some other embodiments, the touch sensor 280K may alternatively be disposed on a surface of the mobile phone 200 at a location different from that of the display 294.

For example, the display 294 of the mobile phone 200 displays a home screen, and the home screen includes icons of a plurality of applications (for example, a camera application and a WeChat application). The user taps an icon of the camera application on the home screen via the touch sensor 280K, to trigger the processor 210 to start the camera application and turn on the camera 293. The display 294 displays an interface of the camera application, for example, a viewfinder interface.

A wireless communication function of the mobile phone 200 may be implemented by using the antenna 1, the antenna 2, the mobile communication module 251, the wireless communication module 252, the modem processor, the baseband processor, and the like.

The antenna 1 and the antenna 2 are configured to transmit and receive an electromagnetic wave signal. Each antenna in the mobile phone 200 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 251 may provide a solution that is applied to the mobile phone 200 and that includes wireless communications such as 2G, 3G, 4G, and 5G. The mobile communication module 251 may include at least one filter, a switch, a power amplifier, a low noise amplifier (low noise amplifier, LNA), and the like. The mobile communication module 251 may receive an electromagnetic wave through the antenna 1, perform processing such as filtering or amplification on the received electromagnetic wave, and transmit the electromagnetic wave to the modem processor for demodulation. The mobile communication module 251 may further amplify a signal modulated by the modem processor, and convert, by using the antenna 1, the signal into an electromagnetic wave for radiation. In some embodiments, at least some functional modules in the mobile communication module 251 may be disposed in the processor 210. In some embodiments, at least some functional modules of the mobile communication module 251 may be disposed in a same device with at least some modules of the processor 210. In this embodiment of this application, the mobile communication module 251 may be further configured to perform information exchange with another terminal device. For example, the mobile communication module 251 may send a captured image to another terminal device, and receive an image sent by another terminal device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 270A, the receiver 270B, or the like), or displays an image or a video by using the display 294. In some embodiments, the modem processor may be an independent component. In some other embodiments, the modem processor may be independent of the processor 210, and is disposed in a same device as the mobile communication module 251 or another functional module.

The wireless communication module 252 may provide a solution to wireless communication applicable to the mobile phone 200, for example, a wireless local area network (wireless local area network, WLAN) (for example, a wireless fidelity (wireless fidelity, Wi-Fi) network), Bluetooth (bl cell phone 21tooth, BT), a global navigation satellite system (global navigation satellite system, GNSS), frequency modulation (freq cell phone 21ncy modulation, FM), near field communication (near field communication, NFC), and an infrared (infrared, IR) technology. The wireless communication module 252 may be one or more components integrating at least one communication processing module. The wireless communication module 252 receives an electromagnetic wave by using the antenna 2, performs frequency modulation and filtering processing on an electromagnetic wave signal, and sends the processed signal to the processor 210. The wireless communication module 252 may further receive a to-be-sent signal from the processor 210, perform frequency modulation and amplification on the to-be-sent signal, and convert, by using the antenna 2, the signal into an electromagnetic wave for radiation. In this embodiment of this application, the wireless communication module 252 is configured to transmit data to another terminal device under control of the processor 210. For example, when the processor 210 runs the image processing method provided in this embodiment of this application, the processor may control the wireless communication module 252 to send an image capture request to another terminal device, and may further receive a secondary image captured by the another terminal device based on the image capture request. The processor may generate a composite image by using the secondary image, and control the display 294 to display the composite image, to provide visual feedback for a user, and adjust the composite image in real time based on user requirements.

In addition, the mobile phone 200 may implement an audio function, for example, music playing and recording, by using the audio module 270, the speaker 270A, the receiver 270B, the microphone 270C, the headset jack 270D, the application processor, and the like. The mobile phone 200 may receive an input from the button 290, and generate a button signal input related to a user setting and function control of the mobile phone 200. The mobile phone 200 may generate a vibration prompt (for example, an incoming call vibration prompt) by using the motor 291. The indicator 292 in the mobile phone 200 may be an indicator light, may be configured to indicate a charging status and a power change, or may be configured to indicate a message, a missed call, a notification, and the like. The SIM card interface 295 in the mobile phone 200 is configured to connect to a SIM card. A SIM card may be inserted into the SIM card interface 295 or removed from the SIM card interface 295, to implement contact with or separation from the mobile phone 200.

It should be understood that, in actual application, the mobile phone 200 may include more or fewer components than those shown in FIG. 5. This is not limited in this embodiment of this application. The mobile phone 200 shown in the figure is merely an example, and the mobile phone 200 may have more or fewer components than those shown in the figure, two or more components may be combined, or different component configurations may be used. Components shown in the figure may be implemented in hardware including one or more signal processing and/or application-specific integrated circuits, software, or a combination of hardware and software.

An embodiment of this application provides an image processing apparatus. The image processing apparatus includes: a processor and a memory that is configured to store instructions executable by the processor. The processor is configured to implement the foregoing method when executing the instructions.

An embodiment of this application provides a non-volatile computer-readable storage medium. The non-volatile computer-readable storage medium stores computer program instructions. When the computer program instructions are executed by a processor, the foregoing method is implemented.

An embodiment of this application provides a computer program product. The computer program product includes computer-readable code or a non-volatile computer-readable storage medium including computer-readable code. When the computer-readable code is run in a processor of an electronic device, the processor in the electronic device performs the foregoing method.

The computer-readable storage medium may be a tangible device that may retain and store instructions for use by an instruction execution device. The computer-readable storage medium may be, for example, but is not limited to, an electrical storage device, a magnetic storage device, an optical storage device, an electromagnetic storage device, a semiconductor storage device, or any suitable combination thereof. A more specific example (non-exhaustive list) of the computer-readable storage medium includes: a portable computer diskette, a hard disk, a random access memory (Random Access Memory, RAM), a read-only memory (ReadOnly Memory, ROM), an erasable programmable read-only memory (Electrically Programmable Read-Only-Memory, EPROM or Flash memory), a static random-access memory (Static Random-Access Memory, SRAM), a portable compact disc read-only memory (Compact Disc Read-Only Memory, CD-ROM), a digital video disc (Digital Video Disc, DVD), a memory stick, a floppy disk, a mechanically encoded device such as a punch-card or a raised structure in a groove storing instructions thereon, and any suitable combination of the foregoing.

The computer-readable program instructions or code described herein may be downloaded from a computer-readable storage medium to each computing/processing device, or downloaded to an external computer or an external storage device over a network, such as the Internet, a local area network, a wide area network, and/or a wireless network. The network may include copper transmission cables, optical fiber transmission, wireless transmission, routers, firewalls, switches, gateway computers, and/or edge servers. A network adapter card or a network interface in each computing/processing device receives computer-readable program instructions from a network, and forwards the computer-readable program instructions for storage in a computer-readable storage medium in each computing/processing device.

The computer program instructions used to perform operations in this application may be assembly instructions, instruction set architecture (Instruction Set Architecture, ISA) instructions, machine instructions, machine-related instructions, microcode, firmware instructions, status setting data, or source code or target code written in one or any combination of more programming languages. The programming languages include object-oriented programming languages such as Smalltalk and C++, and a conventional procedural programming language such as "C" or a similar programming language. The computer-readable program instructions may be executed entirely on a user computer, partly on the user computer, as a stand-alone software package, partly on the user computer and partly on a remote computer, or entirely on the remote computer or a server. When a remote computer is involved, the remote computer may be connected to a user computer over any type of network, including a local area network (Local Area Network, LAN) or a wide area network (Wide Area Network, WAN), or may be connected to an external computer (for example, connected by using an Internet service provider over the Internet). In some embodiments, an electronic circuit, for example, a programmable logic circuit, a field programmable gate array (Field-Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or the block diagrams of the method, the apparatus (system), and the computer program product according to embodiments of this application. It should be understood that each block in the flowcharts and/or the block diagrams and combinations of blocks in the flowcharts and/or the block diagrams may be implemented by computer-readable program instructions.

These computer-readable program instructions may be provided to a processor of a general-purpose computer, a special-purpose computer, or another programmable data processing apparatus to produce a machine, so that the instructions, when executed by the processor of the computer or the another programmable data processing apparatus, create an apparatus for implementing functions/actions specified in one or more blocks in the flowcharts and/or the block diagrams. Alternatively, these computer-readable program instructions may be stored in a computer-readable storage medium. These instructions enable a computer, a programmable data processing apparatus, and/or another device to work in a specific manner. Therefore, the computer-readable medium storing the instructions includes an artifact that includes instructions for implementing various aspects of functions/actions specified in one or more blocks in the flowcharts and/or the block diagrams.

Alternatively, these computer-readable program instructions may be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implements functions/actions specified in one or more blocks in the flowcharts and/or the block diagrams.

The flowcharts and the block diagrams in the appended drawings illustrate system architectures, functions, and operations of possible implementations of apparatuses, systems, methods, and computer program products according to a plurality of embodiments of this application. In this regard, each block in the flowcharts or the block diagrams may represent a module, a program segment, or a part of the instructions, where the module, the program segment, or the part of the instructions includes one or more executable instructions for implementing a specified logical function. In some alternative implementations, the functions marked in the blocks may also occur in a sequence different from that marked in the accompanying drawings. For example, two consecutive blocks may actually be executed substantially in parallel, and sometimes may be executed in a reverse order, depending on a function involved.

It should also be noted that each block in the block diagrams and/or the flowcharts and a combination of blocks in the block diagrams and/or the flowcharts may be implemented by hardware (for example, a circuit or an ASIC (Application-Specific Integrated Circuit, application-specific integrated circuit)) for performing a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, the disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Embodiments of this application are described above. The foregoing descriptions are examples, are not exhaustive, and are not limited to the disclosed embodiments. Many modifications and changes are apparent to a person of ordinary skill in the art without departing from the scope and spirit of the described embodiments. The selection of terms used in this specification is intended to best explain the principles of the embodiments, practical application, or improvements to technologies in the market, or to enable another person of ordinary skill in the art to understand the embodiments disclosed in this specification.

## Claims

1. An image processing method, wherein the method is applied to an electronic terminal having a primary camera, and comprises:
determining at least one secondary camera that performs a communication connection with the primary camera;
obtaining at least one sub-image, wherein the at least one sub-image is obtained by performing image processing on at least one secondary image captured by the at least one secondary camera and a primary image captured by the primary camera; and
generating a composite image by using the at least one sub-image.

2. The method according to claim 1, wherein the obtaining at least one sub-image comprises:
obtaining the at least one secondary image captured by the at least one secondary camera and the primary image captured by the primary camera;
determining, in response to receiving an image processing request, a to-be-processed image on which the image processing is to be performed from the at least one secondary image and the primary image and the image processing for the to-be-processed image; and
obtaining the at least one sub-image obtained by performing image processing on the to-be-processed image.

3. The method according to claim 2, wherein after the determining, in response to receiving an image processing request, a to-be-processed image on which the image processing is to be performed from the at least one secondary image and the primary image and the image processing for the to-be-processed image, the method comprises:
determining, from a candidate execution device, an execution device for performing the image processing on the to-be-processed image; and
obtaining the at least one sub-image obtained by performing image processing on the to-be-processed image by the execution device.

4. The method according to claim 3, wherein the candidate execution device comprises at least one of the electronic terminal and a secondary device on which the at least one secondary camera is located.

5. The method according to claim 4, wherein the determining at least one secondary camera that performs a communication connection with the primary camera comprises:
discovering, by using a discovery and connection service, the at least one secondary camera in an environment in which the electronic terminal is located; and
establishing a communication connection with the secondary device on which the at least one secondary camera is located.

6. The method according to claim 5, wherein the determining, from a candidate execution device, an execution device for performing the image processing on the to-be-processed image comprises:
obtaining communication connection information of a communication connection established with each candidate execution device; and
determining, based on the communication connection information and/or device capability information of each candidate execution device, the execution device for performing the image processing on the to-be-processed image.

7. The method according to claim 6, wherein the determining, based on the communication connection information and/or device capability information of each candidate execution device, the execution device for performing the image processing on the to-be-processed image comprises:
determining, by using the communication connection information of each candidate execution device, a candidate execution device that can perform communication transmission; and
determining, based on device capability information, the execution device from the candidate execution device that can perform communication transmission.

8. The method according to claim 7, wherein the device capability information comprises data processing information and image processing information, the data processing information comprises data processing capability information of each secondary device, and the image processing information comprises information about an image effect that each secondary device can generate on an image.

9. The method according to claim 8, wherein the determining the execution device from the candidate secondary device based on the device capability information comprises:
sorting the candidate execution device by using the data processing information and/or the image processing information of the candidate execution device, and determining a priority of performing image processing by the candidate execution device; and
determining the execution device based on the priority.

10. The method according to claim 8 or 9, wherein the image processing information further comprises an image processing algorithm for implementing the image effect.

11. The method according to claim 10, wherein the method further comprises:
receiving the image processing algorithm from the at least one secondary device through the communication connection.

12. The method according to any one of claims 1 to 11, wherein the generating a composite image by using the at least one sub-image comprises:
performing compositing processing on the at least one sub-image based on a preset image composite mode to generate the composite image.

13. An image processing method, wherein the method comprises:
determining a plurality of cameras that perform communication connection with each other;
obtaining a plurality of sub-images obtained by performing image processing on a plurality of raw images captured by the plurality of cameras; and
generating a composite image by using the plurality of sub-images.

14. The method according to claim 13, wherein the obtaining a plurality of sub-images obtained by performing image processing on a plurality of raw images captured by the plurality of cameras comprises:
determining an execution device for performing corresponding image processing on each raw image; and
obtaining the plurality of sub-images obtained by performing corresponding image processing on each raw image by the execution device.

15. The method according to claim 14, wherein the determining an execution device for performing corresponding image processing on each raw image comprises:
determining, based on device capability information and communication connection information of each execution device, the execution device for performing corresponding image processing.

16. An image processing device, wherein the image processing device comprises:
a processor; and
a memory, configured to store instructions executable by the processor, wherein
the processor is configured to implement the method according to any one of claims 1 to 12, or implement the method according to any one of claims 13 to 15 when executing the instructions. 17. A non-volatile computer-readable storage medium, storing computer program instructions, wherein when the computer program instructions are executed by a processor, the method according to any one of claims 1 to 12 is implemented, or the method according to any one of claims 13 to 15 is implemented.
